# EUROPEAN PATENT SPECIFICATION

(11) **EP 2 725 653 B1**
(45) Date of publication and mention of the grant of the patent: **10.01.2018**
(21) Application number: 12802278.7
(22) Date of filing: 25.06.2012
(51) Int. Cl.: H01M 4/38, H01M 4/96, H01M 12/06, H01M 12/08, H01M 4/66, H01M 4/86

(54) **LITHIUM-AIR BATTERY**
LITHIUM-LUFTBATTERIE
BATTERIE LITHIUM-AIR

(30) Priority: 24.06.2011 KR 20110062000; 25.06.2012 KR 20120068046
(43) Date of publication of application: 30.04.2014
(73) Proprietor: IUCF-HYU (Industry-University Cooperation Foundation Hanyang University), Seoul 133-791 (KR)
(72) Inventor: SUN, Yang Kook, Seoul 135-969 (KR); JUNG, Hun Gi, Busan 611-749 (KR)
(74) Representative: Grzelak, Anna
(86) International application number: PCT/KR2012/005004
(87) International publication number: WO 2012/177104

(56) References cited:
- WO-A1-2010/061452
- WO-A2-2009/009206
- JP-A- 2003 100 309
- JP-A- 2008 112 724
- JP-A- 2009 283 381
- KR-A- 20090 020 521
- US-A1- 2011 059 355
- US-A1- 2011 129 739

## Description

### Field of the Invention

The present invention relates to a lithium-air battery.

### Background of the Invention

It was reported that a lithium-air battery using oxygen in the air as a positive electrode active material shows quite large discharge capacity because oxygen is always supplied from outside of the battery, and a large amount of lithium metal as a negative active material can be charged in the battery.

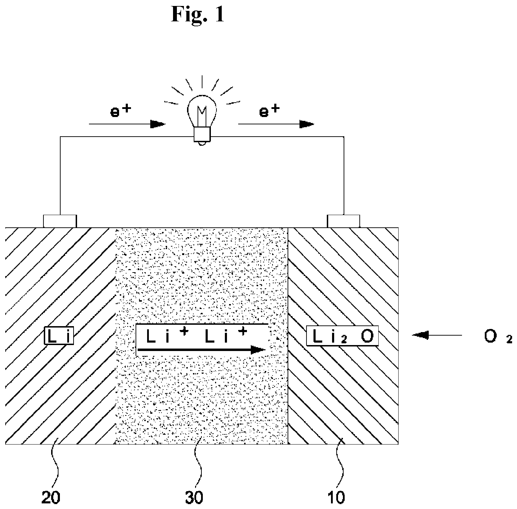

Fundamental structure of the lithium-air battery is shown in FIG. 1. As shown in FIG. 1, the lithium-air battery has structure comprising: a gas diffusion-type oxygen electrode using carbon as a positive electrode 10, lithium metal or lithium compound as a negative electrode 20, and an organic electrolyte 30 between the positive electrode 10 and the negative electrode 20.

In this lithium-air battery, the lithium metal (Li) of the negative electrode 20 is dissolved in the organic electrolyte 30 to be lithium ion (Li⁺ + e⁻), the lithium ion reaches to the positive electrode 10, and then the ion reacts with oxygen (O₂) in the air of the positive electrode, resulting in making lithium oxide (Li₂O) for conducting discharging. Further, charging is conducted by reducing the lithium oxide (Li₂O) produced as described above by applying high voltage between the two electrodes.

Charging : Li⁺ + e⁻ -> Li 4OH⁻ -> O₂+2H₂O+4e⁻

Discharging : Li -> Li⁺ + e⁻ O₂+2H₂O+4e⁻ -> 4OH⁻

In the past, this air battery used organic solvent as an electrolyte, but there was a safety problem when using the battery for a long time because this organic solvent is volatile and mixed with water. Further, on the process supplying air to the positive electrode, the positive electrode is degraded by moisture, carbon dioxide and the like contained in the air, and the moisture, carbon dioxide and the like contained in the air is delivered to the negative electrode through the organic electrolyte and reacted with the lithium in the negative electrode, thereby degrading the negative electrode. As a result, there was a problem of reducing the charging/discharging characteristic of the air battery.

Publication WO2010/061452A1 discloses the lithium-air battery with positive electrode comprising Ketjen black as electron- conducting material, separator made of PVDF-HFP, lithium salt dissolved in electrolyte with PEGDME and lithium metal as negative electrode.

Publication US2011/059355A1 discloses lithium-air battery having positive electrode made of nickel mesh as metal collector coated with Ketjen black as electron-conducing material, glass micro filter paper as separator, (CF3SO2)2Nli as lithium salt dissolved in ethylene carbonate as organic electrolyte and lithium metal as negative electrode.

Publication WO2009/009206A2 discloses a silicon-carbon composite anode for use in lithium ion batteries that owning to its structure can accommodate the volume changes resulting from the lithiation / delithiation process.

### Summary of the Invention

In order to solve the above-mentioned problems, the present invention is objected to provide an air battery system, which can be safely operated for a long time by preventing degradation of a positive electrode and a negative electrode, resulting from preventing reduction of electrolyte or water permeation.

In order to solve the above aspects, the present invention provides a lithium-air battery, which comprises: a positive electrode containing an electron-conducting material; a separator; a lithium salt-dissolved organic electrolyte, wherein the organic electrolyte is TEGDME (tetraethylene glycol dimethyl ether), and a negative electrode, which can occlude and release lithium.

In the present invention, the positive electrode may be a carbon cloth, a carbon paper or a carbon felt, which is coated with an electron-conducting material, or a selective oxygen permeable membrane. In the present invention, the positive electrode may contain a gas diffusion-type electrode, where electrochemical reaction of oxygen is conducted. For this, it does not used a separate collector, and it is possible to use a carbon cloth, a carbon paper or a carbon felt, which is coated with an electron-conducting material, or a selective oxygen permeable membrane. The selective oxygen permeable membrane may be a membrane, which can be used for manufacturing a gas diffusion layer of the conventional fuel battery.

The gas diffusion-type positive electrode of the present invention can be manufactured by a method mixing an electron-conducting material and a binder and then coating the above mixture on a collector such as metal mesh, or making the mixture of the electron-conducting material and the binder in the form of slurry and then coating on the metal mesh and drying thereof. One side of the gas diffusion-type positive electrode manufactured by the said method is exposed to the air, and the other side contacts to an electrolyte.

Discharging reaction at the gas diffusion-type positive electrode by the present invention can be expressed as follows.

2Li⁺ + O₂ + 2e⁻ -> Li₂O₂ (1)

or 2Li⁺+ 1/2 O₂ + 2e⁻ -> Li₂O (2)

In the above formulas, the lithium ion Li⁺ moves from the negative electrode to the surface of the positive electrode through the electrolyte. Further, oxygen O₂ is accepted from the air into inside of the gas diffusion-type electrode. When the Li₂O₂ or Li₂O produced by the discharging reaction is separated on the positive electrode, and covers all reaction sites on the positive electrode, the discharging reaction is completed. Further, electrode reaction during charging is the counter reaction of the reaction formulas (1) and (2). Accordingly, the produced oxygen is released out of the battery, and the lithium ion is reinserted in the negative electrode though the electrolyte.

In the present invention, the electron-conducting material may be selected from the group consisting of: carbon materials consisting of carbon black, ketjen black, acetylene black, active carbon powder, carbon molecular sieve, carbon nanotube, carbon nanowire, activated carbon having micropores, mesoporous carbon and graphite; metal powder consisting of copper, silver, nickel and aluminum; and polyphenylene derivatives. The electron-conducting material in the gas diffusion-type electrode increases the reaction sites on the positive electrode, and it is preferred to have particle diameter of 40 nm or less and surface area of 1000 m²/g or more for enhancing dispersion rate of a catalyst.

In the present invention, the positive electrode may further comprise a metal collector. The collector may be aluminum (Al), nickel (Ni), iron (Fe), titanium (Ti), stainless and the like, but not limited thereto. The shape of the collector may be thin film-type, plate-type, mesh (or grid)-type, foam (or sponge)-type and the like, and it may be the foam (or sponge)-type having good collecting efficiency, preferably.

In the present invention, the metal collector may be coated with the electron-conducting material like on the positive electrode, preferably, for increasing the reaction sites on the positive electrode.

In the present invention, the organic electrolyte is TEGDME (tetraethylene glycol dimethyl ether).

The disclosed organic electrolyte may be expressed by general formula of R¹(CR³₂CR⁴₂O)ₙR², wherein, n may be 2 to 10, R¹ and R² may be each independently selected from H, alkyl, cycloalkyl, aryl, heterocyclyl, heteroaryl, alkoxy, silyl, substituted alkyl, substituted cycloalkyl, substituted aryl, substituted heterocyclyl, substituted heteroaryl, substituted alkoxy, substituted silyl and halogen.

In the disclosed organic electrolyte the R³ and R⁴ may be each independently H, halogen, alkyl, cycloalkyl, aryl, substituted alkyl or substituted aryl.

The disclosed organic electrolyte may be polyethylene oxide, tetraethylene glycol diamine or dimethyl ether.

In the present invention, the lithium salt may be at least one selected from the group consisting of LiBF₄, LiClO₄, LiPF₆, LiAsF₆, LiCF₃SO₃, Li(CF₃SO₂)₂N, LiC₄F₉SO₃, Li(CF₃SO₂)₃C and LiBPh₄. The lithium salt may be used alone or in combination. The concentration of the lithium salt may be 0.1 to 2.0 M, preferably.

In the present invention, the positive electrode may further comprise a binder selected from the group consisting of PVDF, Kynar, polyethylene oxide, polyvinyl alcohol, Teflon, CMC and SBR. The binder plays roles of well adhering the positive electrode active material particles each other, and well adhering the positive electrode active materials on the collector. For example, it may be PVDF, Kynar, polyethylene oxide, polyvinyl alcohol, Teflon, CMC and SBR, but not limited thereto.

In the present invention, the positive electrode may further comprise a catalyst selected from the group consisting of Pt, Pd, Ru, Rh, Ir, Ag, Au, Ti, V, Cr, Mn, Fe, Ni, Co, Cu, Mo, W, Zr, Zn, Ce and La metals, and oxides thereof. The catalyst is an oxidation-reduction catalyst of oxygen, and helps oxidation-reduction of oxygen by being mixed with the conducting material of the gas diffusion-type electrode and coated.

In the present invention, the separator may be a separator used in a general secondary battery, and it may be selected from a polyethylene or polypropylene polymer separator, or a glass fiber separator.

In the present invention, the negative electrode may be a lithium metal, a lithium metal composite treated with organic compounds or inorganic compounds, or a lithiated metal-carbon composite.

In the present invention, the metal of the lithiated metal-carbon composite may be selected from the group consisting of Mg, Ca, Al, Si, Ge, Sn, Pb, As, Bi, Ag, Au, Zn, Cd and Hg.

In the present invention, the lithiated metal-carbon composite may be a lithiated silicon-carbon composite or a lithiated tin-carbon. The lithiated metal-carbon composite electrode form a stable composite by being inserted in carbon crystal structure while lithium forms alloy with metal at the same time. Accordingly, metal volume is changed little during a charging/discharging process, and therefore, it has effects that the charging/discharging efficiency is improved without reduction of the cycle characteristic, the irreversible capacity during the initial charging/discharging can be controlled, and it can replace the lithium metal negative electrode with low stability.

In the present invention, the negative electrode may further comprise a binder selected from the group consisting of PVDF, Kynar, polyethylene oxide, polyvinyl alcohol, Teflon, CMC and SBR.

The shape of the lithium-air battery of the present invention is not particularly limited, but it may be, for example, coin-type, button-type, sheet-type, stacked-type, cylinder-type, plane-type, horn-type and the like. Further, it is also possible to be applied to large-size batteries for electric cars.

### Advantageous Effects of the Invention

The air battery of the present invention uses a low-volatility electrolyte and contains a gas diffusion-type positive electrode formed in a portion thereof contacting air. Accordingly, the battery exhibits the effect of preventing volatilization of the electrolyte, thereby enabling the battery to be used over a long period of time without safety problems and without degradation of the charging/discharging characteristics of the battery, and the effect of air flowing into the battery being provided in a quicker and more uniform manner while passing through the gas diffusion-type positive electrode, thus improving the performance of the battery.

### Brief Description of Drawings

The above and other objects and features of the present invention will become apparent from the following description of the invention taken in conjunction with the following accompanying drawings, which respectively show:
FIG. 1: a diagram showing structure of a lithium-air battery;
FIGs. 2 to 8: results of measuring charging/discharging capacity of the lithium-air batteries, which are manufactured in Examples of the present invention with various conducting materials;
FIGs. 9 to 17: results of measuring charging/discharging capacity of the lithium-air batteries depending on charging/discharging temperature, which are manufactured in Examples of the present invention with various electrolytes;
FIGs. 18 to 20: results of measuring charging/discharging capacity of the lithium-air batteries, which are manufactured in Examples of the present invention with various binders;
FIGs. 21 and 22: the results of measuring charging/discharging capacity of the lithium-air batteries, which are manufactured by using a lithiated tin-carbon composite electrode and a lithiated silicon-carbon composite electrode as a negative electrode.

### Description of Symbols

10: Positive electrode
20: Negative electrode
30: Electrolyte

### Detailed Description of the Invention

Hereinafter, Examples and Comparative Example will be described. The Examples are presented for illustrative purposes only, and do not limit the present invention.

### <Example 1>

TGP-H-30 carbon paper (Torray Industries Inc.) as a positive electrode was coated with each electron-conducting material of the following Table 1 as an electron-conducting material. The electron-conducting material 80 wt% was mixed with PVDF 20 wt% as a binder to prepare slurry, and coated on the TGP-H-30 carbon paper (Torray Industries Inc.) to the density of 1.0 ± 0.1 mg carbon/cm², and then dried under vacuum at 100°C for 12 hrs to remove residual solvent.

**Table 1**

| | Electron-conducting material |
|---|---|
| Example 1-1 | Super P |
| Example 1-2 | Vulcano carbon |
| Example 1-3 | CMK |
| Example 1-4 | CNT |
| Example 1-5 | Graphene oxide |
| Example 1-6 | Acetylene black |
| Example 1-7 | Ketjen black |

A 2032 coin-type cell was manufactured by using a gas diffusion layer (GDL) coated with the electron-conducting material prepared as described above as an air electrode, lithium metal as a negative electrode, (TEGDME)₄-LiCF₃SO₃, which was prepared by dissolving LiCF₃SO₃ salt in TEGDME (Aldrich) at molar ratio of 4:1, as an electrolyte and a separator (Celgard LLC, Celgard 3501) of porous polyethylene film.

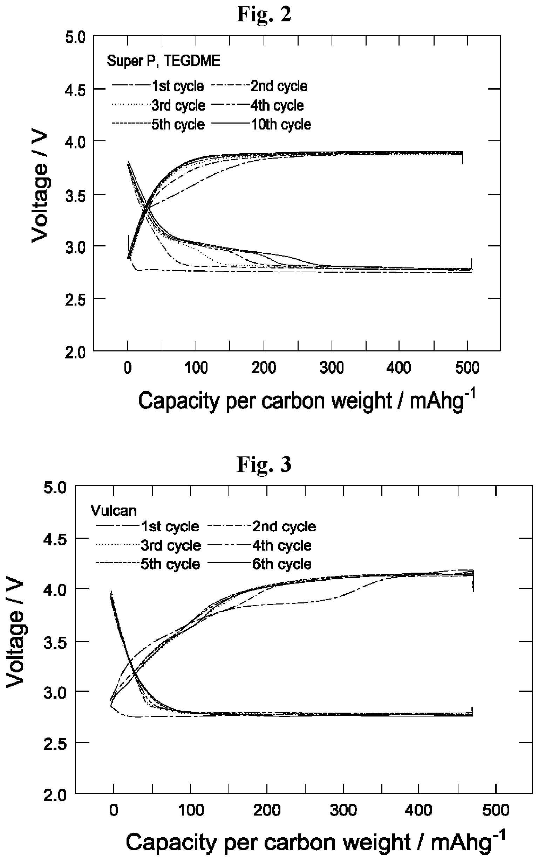

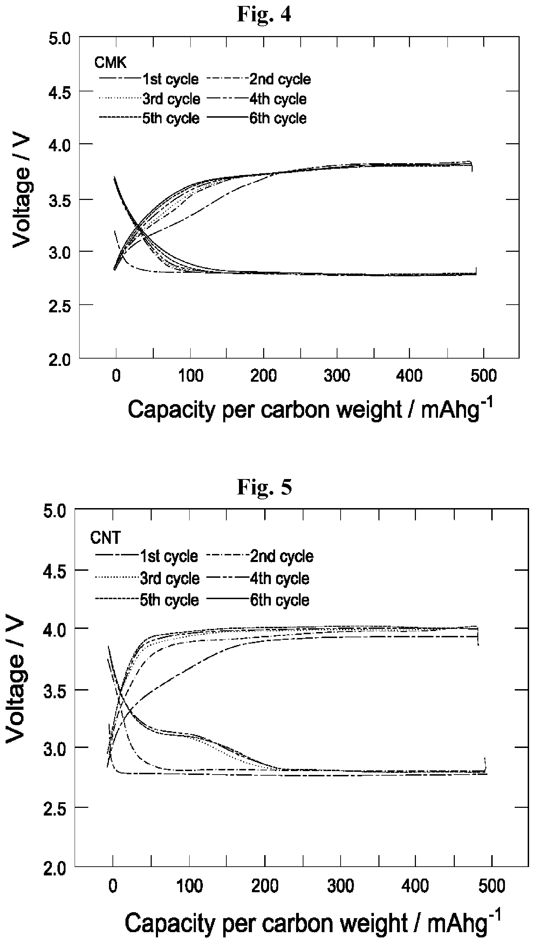

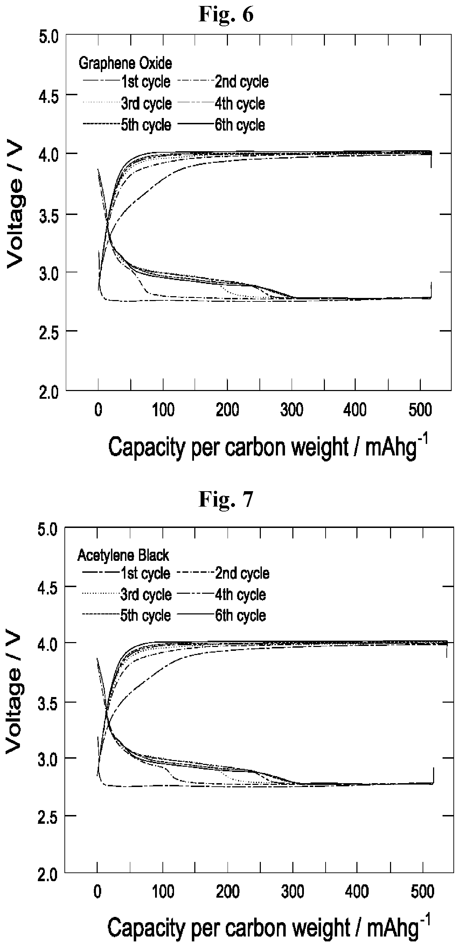

Charging/discharging capacity of the lithium-air batteries manufactured in Examples 1-1 to 1-7 was measured, and the results were shown in FIGs. 2 to 8.

As shown in FIGs. 2 to 8, the lithium-air batteries manufactured in Examples 1-1 to 1-7 showed the charging/discharging capacity of 500 mAh/g and the discharge voltage of around 2.7 V. Accordingly, it can be found that those can work enough as a battery.

### <Example 2>

TGP-H-30 carbon paper (Torray Industries Inc.) as a positive electrode was coated with Super P as an electron-conducting material with the same condition with Example 1.

A 2032 coin-type cell was manufactured by using a gas diffusion layer (GDL) coated with the electron-conducting material prepared as described above as an air electrode, lithium metal as a negative electrode, each electrolyte of the following Table 2 as an electrolyte and a separator (Celgard LLC, Celgard 3501) of porous polyethylene film.

**Table 2**

| | Electrolyte Used | Discharge Temperatur e | Result of Measuring Charging/Discharging Characteristics |
|---|---|---|---|
| Example 2-1 | (TEGDME)₄-LiCF₃SO₃ | Room temperature | FIG. 9 |
| | | 50°C | FIG. 10 |
| | | 70°C | FIG. 11 |
| Example 2-2 | PEO-(TEGDME)₄-LiCF₃SO₃ | 50°C | FIG. 12 |
| | | 70°C | FIG. 13 |
| Comparative Example 2-3 | PEGDME-LiCF₃SO₃ | Room temperature | FIG. 14 |
| | | 50°C | FIG. 15 |
| | | 70°C | FIG. 16 |
| Comparative Example 2-4 | PEO-LiCF₃SO₃ | 70°C | FIG. 17 |

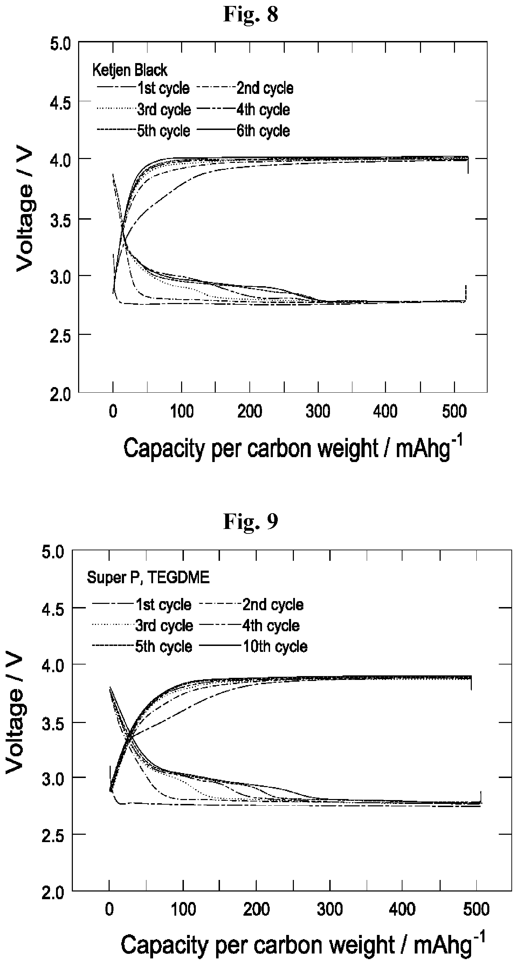

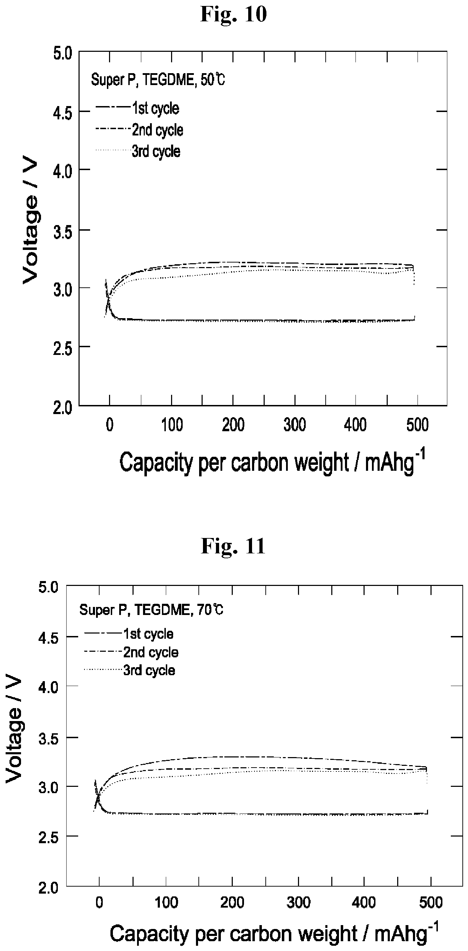

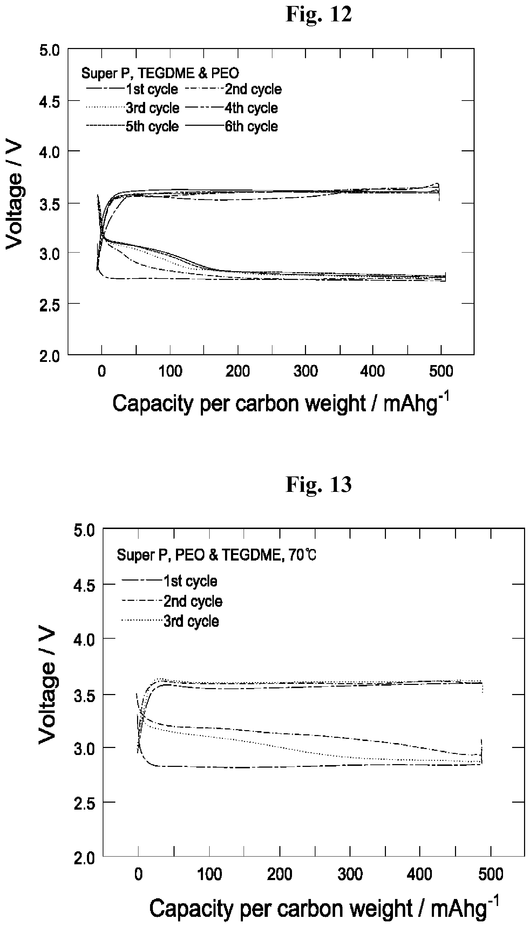

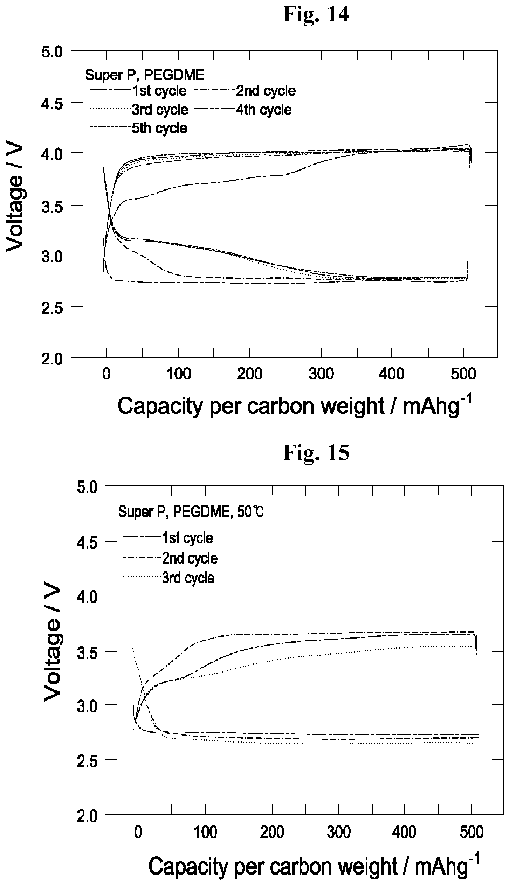

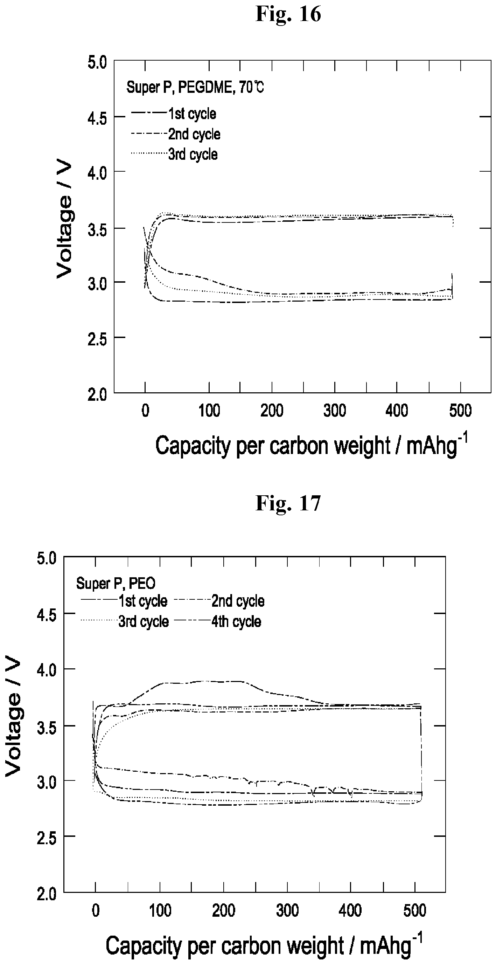

Charging/discharging capacity of the lithium-air batteries manufactured in Examples 2-1 to 2-2 and Comparative Examples 2-3 to 2- was measured at the temperature of Table 2, and the results were shown in FIGs. 9 to 17.

As shown in FIGs. 9 to 17, when using as TEGDME an electrolyte, the charging voltage was 4.0 V and the discharging voltage was 2.7 V. Accordingly, it can be found that its charging/discharging capacity is the largest, and significantly reduced as the charging/discharging temperature increased from 50°C to 70°C.

### <Example 3>

Positive electrodes and air batteries were manufactured as described in Example 1 by using TGP-H-30 carbon paper (Torray Industries Inc.) as a positive electrode and Super P as an electron-conducting material, and mixing the Super P 80 wt% with each binder of the following Table 3 20 wt%.

**Table 3**

| | Binder Used |
|---|---|
| Example 3-1 | PVdF |
| Example 3-2 | PEO |
| Example 3-3 | Kynar |

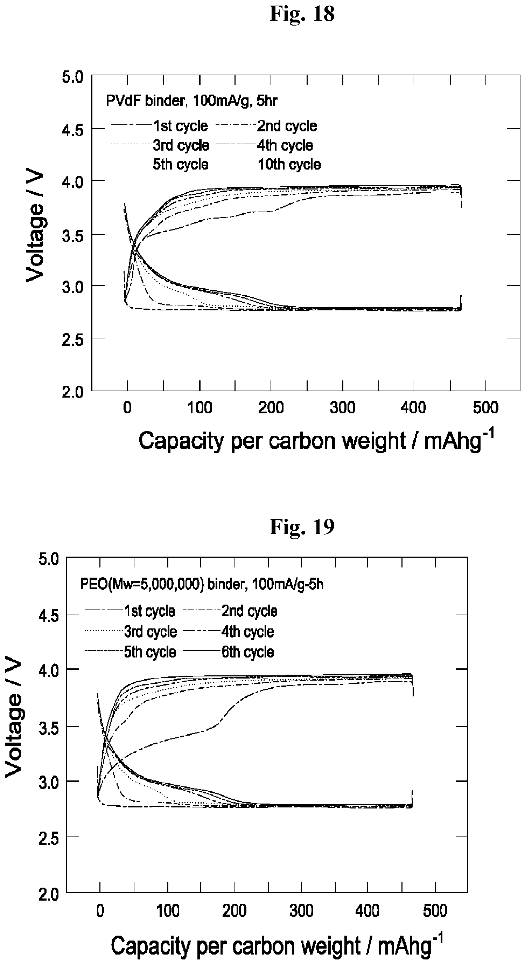

Charging/discharging capacity of the lithium-air batteries manufactured in Examples 3-1 to 3-3 was measured, and the results were shown in FIGs. 18 to 20.

As shown in FIGs. 18 to 20, it can be found that the charging voltage and the discharging voltage vary depending on types of binders, but similar each other.

### <Example 4>

A positive electrode was manufactured as described in Example 1 by coating TGP-H-30 carbon paper (Torray Industries Inc.) as a positive electrode with Super P as an electron-conducting material.

As a negative electrode, a lithiated tin-carbon composite electrode was used. Resorcinol (Aldrich) 28 mmol and formaldehyde (37 wt% aqueous solution, Aldrich) 120 mmol were mixed, and sodium carbonate catalyst was added to the mixture at molar ratio of 45:100 to resorcinol. The obtained mixture was stirred at 75°C for 1 hr to obtain a gel-type mixture. The obtained gel-type mixture was aged at room temperature for about 24 hrs. The aged mixture was washed with water and ethanol to remove sodium carbonate. The resulting product was soaked in tributylphenyltin (Aldrich) solution (solvent: water, Concentration: 37 wt%) for a day, and then heated under Ar atmosphere at 700°C for 2 days to manufacture a tin-carbon composite. The manufactured tin-carbon composite, Super P carbon black conducting material and polyvinylene fluoride binder were mixed at the weight ratio of 80 : 10 : 10 in N-methylpyrrolidone solvent to manufacture tin-carbon composite slurry. The tin-carbon composite slurry was casted on Cu foil, and the obtained product was dried in an 100°C oven for 2 hrs, and then vacuum dried for 12 hrs or more.

The vacuum dried product was cut into the proper size, lithium metal was set thereon, and then an electrolyte (1.2 M LiPF₆-dissolved mixture solvent of ethylene carbonate and dimethyl carbonate (3:7 volume ratio)) was evenly sprinkled on the lithium metal. Then, 0.5kg/cm² pressure was applied on the obtained product, kept for 30 min, and then the lithium metal was carefully removed to manufacture a lithiated tin-carbon composite electrode.

A 2032 coin-type cell was manufactured by using the Super P-coated gas diffusion layer (GDL) as an air electrode, the tin-carbon composite electrode as a negative electrode, (TEGDME)₄-LiCF₃SO₃, which dissolving LiCF₃SO₃ salt in TEGDME (Aldrich) at the molar ratio of 4:1, as an electrolyte and a separator (Celgard LLC, Celgard 3501) of porous polyethylene film.

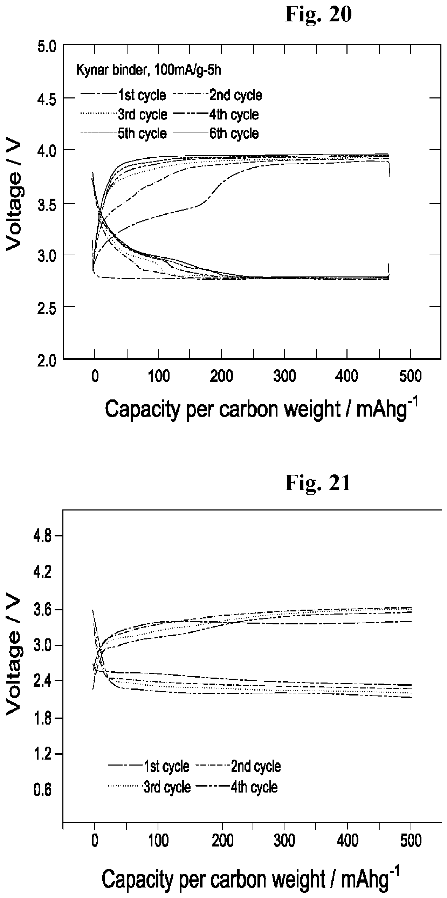

Charging/discharging capacity of the lithium-air battery manufactured as described above was measured, and the result was shown in FIG. 21.

As shown in FIG. 21, it can be found that lithium-air battery manufactured in Example 4 showed the charging/discharging capacity of 500 mAh/g and the discharge voltage of around 2.5 V. Accordingly, it can be found that it can work enough as a battery.

### <Example 5>

The procedure of Example 4 was repeated except for using a lithiated silicon-carbon composite electrode as a negative electrode to manufacture a lithium-air battery.

The lithiated silicon-carbon composite electrode was manufactured as follows. First of all, a silicon-graphite composite having particle size of 5 to 15 µm was prepared. The prepared silicon-graphite composite powder, Super P, CMC and SBR were mixed in NMP at the weight ratio of 85:5:3.3:6.7 to prepare slurry, and then casted on copper foil as a collector. The casted electrode was primarily dried in an 110°C oven for 2 hrs, and then secondly dried under vacuum for 12 hrs to manufacture to the form of an electrode.

The manufactured electrode was cut into the size of 2 × 2 cm², Li metal was stacked on the electrode, a solution, wherein 12 M LiPF₆ was dissolved in EC:DMC mixed solution (3:7), was coated thereon, and then the pressure of 46 N/m² was applied on the stacked Li metal for 30 min to manufacture the lithiated silicon-carbon composite electrode.

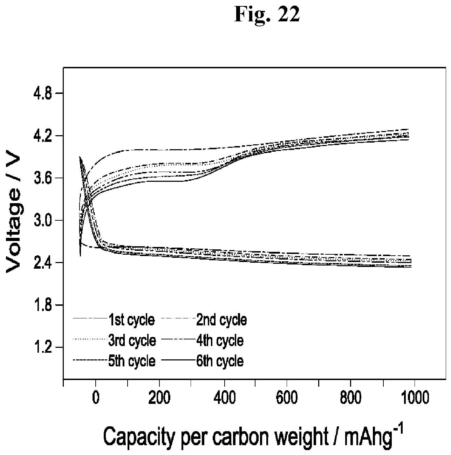

A 2032 coin-type cell was manufactured by using the lithiated tin-carbon composite electrode manufactured as described above as a negative electrode and (TEGDME)₄-LiCF₃SO₃ as an electrolyte, and then charging/discharging capacity of the manufactured lithium-air battery was measured, and the result was shown in FIG. 22.

### Industrial Applicability

The air battery of the present invention uses a low-volatility electrolyte and contains a gas diffusion-type positive electrode formed in a portion thereof contacting air. Accordingly, the battery exhibits the effect of preventing volatilization of the electrolyte, thereby enabling the battery to be used over a long period of time without safety problems and without degradation of the charging/discharging characteristics of the battery, and the effect of air flowing into the battery being provided in a quicker and more uniform manner while passing through the gas diffusion-type positive electrode, thus improving the performance of the battery.

While the invention has been described with respect to the above specific embodiments, it should be recognized that various modifications and changes may be made and also fall within the scope of the invention as defined by the claims that follow.

## Claims

1. A lithium-air battery comprising:
a positive electrode (10) comprising an electron-conducting material;
a separator;
a lithium salt-dissolved organic electrolyte (30); and
a negative electrode (20), which can occlude or release lithium,
**characterized in that** the organic electrolyte is tetraethylene glycol dimethyl ether, TEGDME.

2. The lithium-air battery according to claim 1, wherein the positive electrode (10) comprises a carbon cloth, a carbon paper or a carbon felt, which is coated with an electron-conducting material, or a selective oxygen permeable membrane.

3. The lithium-air battery according to claim 1, wherein the positive electrode (10) further comprises a metal collector.

4. The lithium-air battery according to claim 3, wherein the metal collector is coated with an electron-conducting material.

5. The lithium-air battery according to claim 1 to 4, wherein the electron-conducting material is selected from the group consisting of: carbon materials consisting of carbon black, ketjen black, acetylene black, active carbon powder, carbon molecular sieve, carbon nanotube, carbon nanowire, activated carbon having micropores, mesoporous carbon and graphite; metal powder consisting of copper, silver, nickel and aluminum; and polyphenylene derivatives.

6. The lithium-air battery according to claim 1, wherein the lithium salt is at least one selected from the group consisting of LiBF₄, LiClO₄, LiPF₆,LiAsF₆, LiCF₃SO₃, Li(CF₃SO₂)₂N, LiC₄F₉SO₃, Li(CF₃SO₂)₃C and LiBPh₄.

7. The lithium-air battery according to claim 1, wherein the lithium salt is dissolved in an amount of 2 to 5 moles based on the organic electrolyte 1mole.

8. The lithium-air battery according to claim 1, wherein the positive electrode (10) further comprises a binder selected from the group consisting of PVDF, polyethylene oxide, polyvinyl alcohol, polytetrafluoroethylene, CMC and SBR.

9. The lithium-air battery according to claim 1, wherein the positive electrode further comprises a catalyst selected from the group consisting of Pt, Pd, Ru, Rh, Ir, Ag, Au, Ti, V, Cr, Mn, Fe, Ni, Co, Cu, Mo, W, Zr, Zn, Ce and La metals, and oxides thereof.

10. The lithium-air battery according to claim 1, wherein the separator is selected from the group consisting of a polyethylene separator, a polypropylene separator or a glass fiber separator.

11. The lithium-air battery according to claim 1, wherein the negative electrode is a lithium metal or a lithiated metal-carbon composite.

12. The lithium-air battery according to claim 13, wherein the lithiated metal-carbon composite is a lithiated silicon-carbon composite or a lithiated tin-carbon composite.

## Patentansprüche

1. Eine Lithium-Luft-Batterie, umfassend:
eine positive Elektrode (10), die ein elektronenleitendes Material umfasst;
ein Separator;
ein in Lithiumsalz gelöster organischer Elektrolyt (30); und
eine negative Elektrode (20), die Lithium verschließen oder freisetzen kann,
**dadurch gekennzeichnet, dass** der organische Elektrolyt Tetraethylenglykoldimethylether, TEGDME ist.

2. Lithium-Luft-Batterie nach Anspruch 1, wobei die positive Elektrode (10) ein Kohlenstoffgewebe, ein Kohlepapier oder einen Kohlenstoffilz umfasst, das mit einem elektronenleitenden Material oder einer selektiven sauerstoffdurchlässigen Membran beschichtet ist.

3. Lithium-Luft-Batterie nach Anspruch 1, wobei die positive Elektrode (10) ferner einen Metallsammler umfasst.

4. Lithium-Luft-Batterie nach Anspruch 3, wobei der Metallsammler mit einem elektronenleitenden Material beschichtet ist.

5. Lithium-Luft-Batterie nach Anspruch 1 bis 4, wobei das elektronenleitende Material aus der Gruppe bestehend aus: Kohlenstoffmaterialien, bestehend aus Ruß, Ketjenschwarz, Acetylenruß, Aktivkohlepulver, Kohlenstoffmolekularsieb, Kohlenstoffnanoröhren, Kohlenstoffnanodraht, Aktivkohle mit Mikroporen, mesoporösem Kohlenstoff und Graphit; Metallpulver bestehend aus Kupfer, Silber, Nickel und Aluminium; und Polyphenylenderivate, ausgewählt ist.

6. Lithium-Luft-Batterie nach Anspruch 1, wobei das Lithiumsalz mindestens eines ist, das aus der Gruppe bestehend aus LiBF₄, LiClO₄, LiPF₆,LiAsF₆, LiCF₃SO₃, Li(CF₃SO₂)₂N, LiC₄F₉SO₃, Li(CF₃SO₂)₃C und LiBPh₄.ausgewählt ist.

7. Lithium-Luft-Batterie nach Anspruch 1, wobei das Lithiumsalz in einer Menge von 2 bis 5 Mol, bezogen auf den 1 Mol des organischen Elektrolyts, gelöst ist.

8. Lithium-Luft-Batterie nach Anspruch 1, wobei die positive Elektrode (10) ferner einen Bindemittel, der aus der Gruppe bestehend aus PVDF, Polyethylenoxid, Polyvinylalkohol, Polytetrafluorethylen, CMC und SBR ausgewählt ist, umfasst.

9. Lithium-Luft-Batterie nach Anspruch 1, wobei die positive Elektrode ferner einen Katalysator, der aus der Gruppe bestehend aus Pt, Pd, Ru, Rh, Ir, Ag, Au, Ti, V, Cr, Mn, Fe, Ni, Co-, Cu-, Mo-, W-, Zr-, Zn-, Ce- und La-Metalle und Oxide davon ausgewählt ist, umfasst.

10. Lithium-Luft-Batterie nach Anspruch 1, wobei der Separator aus der Gruppe bestehend aus einem Polyethylen-Separator, einem Polypropylen-Separator oder einem Glasfaser-Separator ausgewählt ist.

11. Lithium-Luft-Batterie nach Anspruch 1, wobei die negative Elektrode ein Lithiummetall oder ein lithiierter Metall-Kohlenstoff-Verbund ist.

12. Lithium-Luft-Batterie nach Anspruch 13, wobei der lithiierte Metall-Kohlenstoff-Verbund ein lithiierter Silizium-Kohlenstoff-Verbund oder ein lithiierter Zinn-Kohlenstoff-Verbund ist.

## Revendications

1. Un accumulateur lithium-oxygène comprenant :
une électrode positive (10) comprenant un matériau conducteur d'électrons ;
un séparateur ;
un électrolyte organique dissous au sel de lithium (30); et
une électrode négative (20) qui peut occlure ou libérer du lithium,
**caractérisé en ce que** l'électrolyte organique est le tétraéthylène glycol diméthyléther, TEGDME.

2. L'accumulateur lithium-oxygène selon la revendication 1, dans lequel l'électrode positive (10) comprend un tissu de carbone, un papier de carbone ou un feutre de carbone, qui est revêtu d'un matériau conducteur d'électrons, ou une membrane sélective perméable à l'oxygène.

3. L'accumulateur lithium-oxygène selon la revendication 1, dans lequel l'électrode positive (10) comprend en outre un collecteur métallique.

4. L'accumulateur lithium-oxygène selon la revendication 3, dans lequel le collecteur métallique est revêtu d'un matériau conducteur d'électrons.

5. L'accumulateur lithium-oxygène selon les revendications 1 à 4, dans lequel le matériau conducteur d'électrons est sélectionné dans le groupe constitué de: matériaux de carbone constitués de noir de carbone, ketjen noir, acétylène noir, poudre de carbone actif, tamis moléculaire de carbone, nanotube de carbone, nanofil de carbone, carbone activé ayant des micropores, carbone mésoporeux et graphite ; poudre de métal constituée de cuivre, d'argent, de nickel et d'aluminium; et dérivés de polyphénylène.

6. L'accumulateur lithium-oxygène selon la revendication 1, dans lequel le sel de lithium est au moins un choisi dans le groupe constitué par LiBF₄, LiClO₄, LiPF₆, LiAsF₆, LiCF₃SO₃, Li(CF₃SO₂)₂N, LiC₄F₉SO₃, Li(CF₃SO₂)₃C et LiBPh₄.

7. L'accumulateur lithium-oxygène selon la revendication 1, dans lequel le sel de lithium est dissous dans une quantité de 2 à 5 moles sur la base d'1 mole d'électrolyte organique.

8. L'accumulateur lithium-oxygène selon la revendication 1, dans lequel l'électrode positive (10) comprend en outre un liant choisi dans le groupe constitué par PVDF, oxyde de polyéthylène, alcool polyvinylique, polytétrafluoroéthylène, CMC et SBR.

9. L'accumulateur lithium-oxygène selon la revendication 1, dans lequel l'électrode positive comprend en outre un catalyseur choisi dans le groupe constitué par des métaux Pt, Pd, Ru, Rh, Ir, Ag, Au, Ti, V, Cr, Mn, Fe, Ni, Co, Cu, Mo, W, Zr, Zn, Ce et La, et des oxydes de ceux-ci.

10. L'accumulateur lithium-oxygène selon la revendication 1, dans lequel le séparateur est choisi dans le groupe constitué par un séparateur en polyéthylène, un séparateur en polypropylène ou un séparateur en fibre de verre.

11. L'accumulateur lithium-oxygène selon la revendication 1, dans lequel l'électrode négative est un métal de lithium ou un composite métal lithié-carbone.

12. L'accumulateur lithium-oxygène selon la revendication 13, dans lequel le composite métal lithié-carbone est un composite silicium lithié-carbone ou un composite étain lithié-carbone.
